# EUROPÄISCHE PATENTSCHRIFT

(11) **EP 0 657 324 B1**
(45) Veröffentlichungstag und Bekanntmachung des Hinweises auf die Patenterteilung: **12.03.1997**
(21) Anmeldenummer: 94116307.3
(22) Anmeldetag: 17.10.1994
(51) Int. Cl.: B60R 9/04

(54) **Dachreling für Fahrzeuge**
Roof rails for vehicles
Rails de toit pour véhicules

(30) Priorität: 07.12.1993 DE 4341619
(43) Veröffentlichungstag der Anmeldung: 14.06.1995
(73) Patentinhaber: Happich Fahrzeug-Dachsysteme GmbH, D-42285 Wuppertal (DE)
(72) Erfinder: Lumpe, Karl-Heinz, D-42279 Wuppertal (DE); Kolodziej, Klaus, D-42327 Wuppertal (DE); Rehm, Ulrich, D-58089 Hagen (DE); Grätz, Ronald, D-45276 Essen (DE)

(56) Entgegenhaltungen:
- DE-A- 3 626 926
- FR-A- 1 578 752
- US-A- 3 623 642

## Beschreibung

Die Erfindung bezieht sich auf eine Dachreling für Fahrzeuge mit einem sich in einem Abstand und im wesentlichen parallel zur Dachfläche längs eines seitlichen Dachrahmens erstreckenden rohrförmigen Holm und zwei Stützen an den Holmenden zum Befestigen der Dachreling auf dem Fahrzeugdach, wobei der Holm an den Endbereichen mit jeweils einer Abbiegung ausgebildet ist.

Üblicherweise besteht eine Dachreling für Fahrzeuge aus einem Holm an jeder Dachseite und mindestens zwei jeweils einen Holm tragenden Stützfüßen (vgl. z. B. DE- 40 04 829 A1). Die Stützfüße sind in der Regel als Metallgußteile ausgeführt mit in die Holmenden eingreifenden Zapfen. Diese Zapfen sind wegen der in der Praxis nicht zu vermeidenden Spaltbildung zum Holm optisch störend und bilden die Belastbarkeit der Dachreling schwächende Übergänge.

Bei einer gattungsgemäßen Dachreling für Fahrzeuge nach der DE 29 46 533 A1 ist gezeigt, daß die Holme an den Endbereichen mit jeweils einer Abbiegung ausgebildet sind. Die nach unten abgebogenen Enden der Holme sollen laut zugehöriger Beschreibung durch Schrauben oder dgl. auf der Dachhaut eines Fahrzeugs befestigbar sein. Dieser allgemeine Hinweis ist nicht geeignet einem Fachmann eine nachvollziehbare Lehre zu erteilen, weil nicht klar ist, wie im offenen Ende eines rohrförmigen Holms eine Schraube oder dgl. festzulegen ist.

Der Erfindung liegt daher ausgehend von einer Dachreling der eingangs genannten und durch die DE 29 46 533 A1 bekanntgemachten Art die Aufgabe zugrunde, Vorsorge dafür zu treffen, daß dieselbe in einfacher und zuverlässiger Weise auf einem Fahrzeugdach befestigt werden kann.

Gemäß der Erfindung ist zur Lösung dieser Aufgabe vorgesehen, daß der Holm im Bereich jeder Abbiegung von einer am Holm befestigten Stütze, die an ihrer Oberseite eine, einen Teilbereich des Holmumfanges umschließende Nut aufweist, untergriffen ist und daß jede Stütze ihrerseits am Fahrzeugdach befestigbar ist.

Aufgrund der erfindungsgemäßen Maßnahmen ergibt sich eine relativ einfache und preiswerte Herstellung einer Dachreling, die im wesentlichen aus einem sich unmittelbar auf der Dachfläche abstützenden gebogenen Strangpreßprofil, das aus Leichtmetall gebildet sein sollte und den im Bereich der Abbiegungen angeordneten Stützen besteht und die aufgrund der vorgesehenen Stützen insbesondere auch schnell, einfach und zuverlässig befestigt werden kann.

Die Festlegung der Holme mit Abbiegungen am Fahrzeugdach erfolgt über die Stützen. Dabei ist vorgesehen, daß jede Stütze eine untere sich auf dem Fahrzeugdach abstützende Stützfläche und eine obere, der jeweiligen Abbiegung des Holms folgende konkav ausgebildete Auflagefläche für den Holm aufweist und zum einen am Fahrzeugdach und zum anderen am Holm anschraubbar ist. Jede Stütze bildet somit einen Adapter zur Festlegung der eigentlichen, nur aus dem gebogenen Holm gebildeten Dachreling. Jede Stütze kann zudem eine die Dachreling optisch aufwertende Zierfunktion übernehmen, insbesondere dann, wenn in Ausgestaltung der Erfindung vorgesehen ist, jede Stütze von unten her mit dem Holm und von unten her mit dem Fahrzeugdach zu verschrauben. Eine Verschraubung von unten her bietet den Vorteil, daß die Anschraubpositionen zumindest weitgehend den Blicken eines Betrachters entzogen sind.

Gemäß einer anderen, oftmals bevorzugten Ausgestaltung der Erfindung kann jede Stütze von unten her mit dem Holm und von oben her mit dem Fahrzeugdach verschraubbar sein. Bei einer Verschraubung der Stützen von oben, wird jeweils eine Schraube durch eine entsprechende Durchgangsbohrung der Stütze geführt und in eine am Fahrzeugdach von unten her angeschweißte Gewindemutter oder dgl. eingedreht. Auf diese Weise läßt sich die Dachreling für eine etwaige Nachlackierung schnell und einfach vom Dach abnehmen. Einem Anschrauben der Stützen von oben steht an sich der Nachteil des Sichtbarmachens der Anschraubpositionen entgegen.

Eine Weiterbildung der Erfindung eliminierten jedoch diesen Nachteil dadurch, daß jede Stütze eine optisch einen Stützfuß bildende, sich an der jeweiligen Abbiegung des Holms abstützende Abdeckkappe trägt, die einen U-förmigen Querschnitt mit Schenkeln aufweist, die parallel zum Holm verlaufen und mit ihren freien Enden zum jeweiligen Holmende ausgerichtet sind. Eine solche Abdeckkappe mit stilistischer Freiheit in der Gestaltung entzieht nicht nur die Anschraubstellen den Blicken eines Betrachters, sondern ermöglicht es, unbearbeitete Stützen einsetzen zu können, d. h. Stützen, die nicht einer Oberflächenbehandlung, wie Schleifen, Polieren und dgl. unterzogen werden müssen, weil die Stützen vollständig durch die Abdeckkappen eingekapselt sind.

Es kann weiterhin vorgesehen sein, daß jede Stütze eine Abdeckkappe trägt, die sich über den gesamten axialen Bereich einer Abbiegung des Holms erstreckt. Dabei ist jede Abdeckkappe bevorzugterweise als Kunststoff-Spritzgußteil ausgebildet und weist zudem angeformte Rastelemente zur Halterung an jeweils einer Stütze auf. Diese Maßnahmen tragen zur einfachen und preisgünstigen Herstellbarkeit der Dachreling bei.

Ausführungsbeispiele der Erfindung werden nachfolgend anhand der Zeichnung näher erläutert, und es zeigen:
- Fig. 1: einen Endbereich einer ersten Ausführungsform der Dachreling mit Stützen,
- Fig. 2: einen Schnitt etwa folgend der Linie II - II in Fig. 1,
- Fig. 3: einen Endbereich einer zweiten Ausführungsform der Dachreling mit Stütze und daran angeordneter Abdecklappe,
- Fig. 4: eine Ansicht der Stütze nach Fig. 3 und
- Fig. 5: eine Ansicht der Abdeckkappe nach Fig. 3.

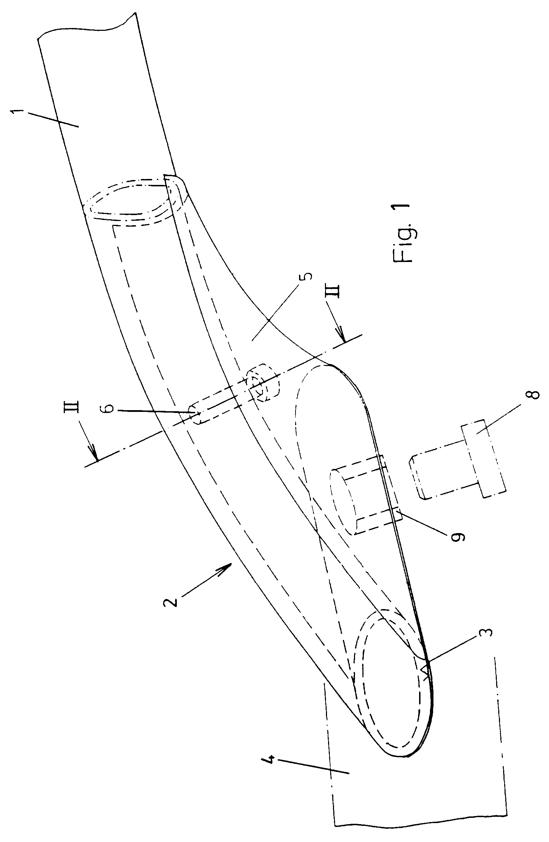

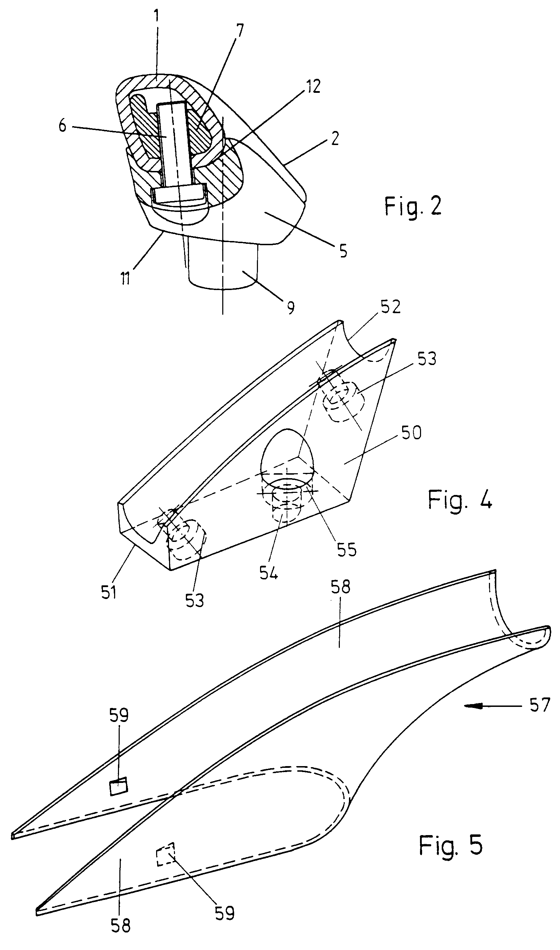

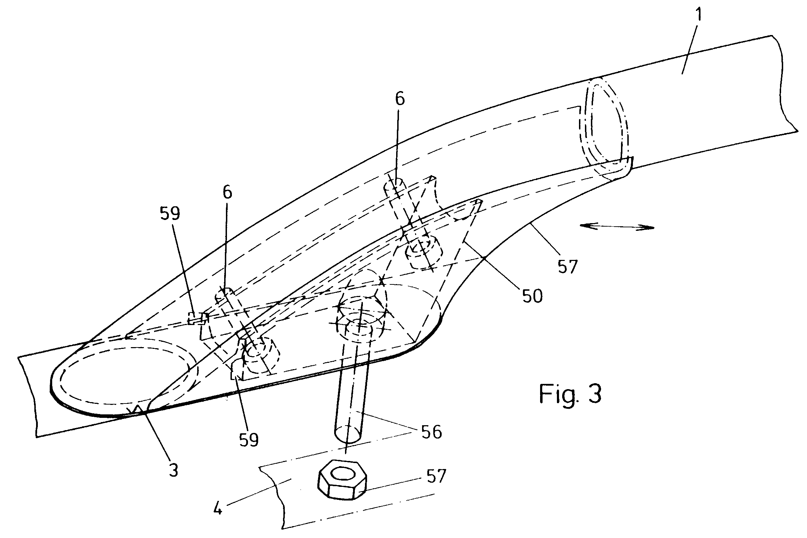

Die neue Dachreling nach Fig. 1 und 2 wird aus einem Abschnitt eines rohrförmigen Strangpreßprofils gebildet und besteht im wesentlichen aus einem Holm 1, dessen beide Endbereiche jeweils mit einer Abbiegung 2 ausgebildet sind. Die freien Enden 3 des Holms 1, von denen die Zeichnung lediglich eines zeigt, sind so bearbeitet, daß sie sich planparallel auf der Dachfläche 4 eines nicht dargestellten Fahrzeugs abzustützen vermögen. Zur Befestigung des Holms 1 auf der Dachfläche 4 ist an jedem Holmende im Bereich jeder Abbiegung 2 eine Stütze 5 von unten her mit dem Holm 1 verschraubt, so daß die Anschraubstelle nicht ohne weiteres einsehbar ist.

Die Stütze 5 ist ihrerseits von unten her am Fahrzeugdach befestigbar, und zwar mittels einer durch das Dachblech zu führenden Schraube 8, die in Fig. 1 strichpunktiert angedeutet ist. Die Schraube 8 greift in eine Gewindebohrung der Stütze 5 von unten her ein, die auch in einem an der Stütze 5 angeformten, in einen nicht gezeigten Dachkanal eingreifenden Dom 9 vorgesehen sein kann. Die Dachreling kann mit am Holm 1 vormontierten Stützen 5 angeliefert werden und braucht vom Kunden lediglich noch aufs Fahrzeugdach aufgesetzt und von unten her verschraubt zu werden. Es empfiehlt sich, zwischen der Dachfläche 4 und der Stützfläche 11 der Stützen 5 jeweils eine Dichtung anzuordnen.

Wie Fig. 2 zeigt, weist die Stütze 5 eine untere, sich auf der Dachfläche 4 abstützende Stützfläche 11 und eine obere, der jeweiligen Abbiegung 2 folgende als konkave Nut 12 ausgebildete Auflagefläche für den Holm 1 im Bereich der Abbiegung 2 auf.

Beim zweiten Ausführungsbeispiel der neuen Dachreling nach Fig. 3 bis 5 ist ebenfalls ein Holm 1 vorgesehen, dessen beide Endbereiche jeweils mit einer Abbiegung 2 ausgebildet sind, obgleich Fig. 3 nur einen dieser Endbereiche zeigt. Auch hier sind die freien Enden 3 des Holms 1 so bearbeitet, daß sie sich planparallel auf der Dachfläche 4 abstützen können.

Zur Befestigung des Holms 1 dient ein Adapter in Form einer Stütze 50, die schmaler als der Holmdurchmesser und kürzer als die axiale Erstreckung der Abbiegung 2 ist. Die Stütze 50 weist auch eine untere, sich auf der Dachfläche 4 abstützende Stützfläche 51 und eine obere Stützfläche in Form einer Hohlnut 52 für die Abstützung einer Teillänge des Holms 1 im Bereich der Abbiegung 2 auf. Die Stütze 50 ist mit Stufenbohrungen 53 zum Durchführen von im Holm 1 oder ggf. darin angeordneten Gewindesteinen eingreifenden Schrauben 6 ausgebildet. Eine weitere Bohrung 54 geht von einer Seitenwand der Stütze aus, bildet hier eine Stützfläche 55 und durchsetzt die Stützfläche 51. Die Bildung der Stützfläche 55 läßt sich dadurch realisieren, daß die Seitenwände der Stütze nicht senkrecht, sondern schräg zur Stützfläche 51 verlaufen, weil die parallel zueinander ausgerichteten Holme 1 im allgemeinen einanderzugeneigt auf einem Fahrzeugdach angeordneten sind.

Die mit den Abbiegungen 2 versehenen Holme 1 werden oder können vor Anlieferung mit den Adaptern bzw. Stützen 50 mittels der Schrauben 6 verschraubt werden. Bei der Endmontage wird mit der Schraube 56 die vormontierte Baueinheit mit dem Fahrzeugdach verschraubt, wobei eine Montage von oben her vorgesehen ist. Um dies zu ermöglichen, ist unter der Dachfläche 4 eine Schweißmutter 57 angeordnet.

Um die Dachreling zu vervollkommnen, wird jede Stütze 50 mit einer Abdeckkappe 57 bestückt. Die Abdeckkappe 57 ist U-förmig gestaltet mit Schenkeln 58, deren freie Enden der Abbiegung 2 angepaßt sind und sich am Holm 1 abstützen. Die Abdeckkappe 57 ist zweckmäßigerweise als Kunststoff-Spritzgußteil ausgeführt und weist angeformte Rastelemente 59 zur Festlegung an der zugehörigen Stütze 50 auf.

## Patentansprüche

1. Dachreling für Fahrzeuge mit einem, sich in einem Abstand und im wesentlichen parallel zur Dachfläche (4) längs eines seitlichen Dachrahmens erstreckenden rohrförmigen Holm (1) und zwei Stützen (5, 50) an den Holmenden zum Befestigen der Dachreling auf dem Fahrzeugdach, wobei der Holm an den Endbereichen mit jeweils einer Abbiegung (2) ausgebildet ist, dadurch gekennzeichnet, daß der Holm (1) im Bereich jeder Abbiegung (2) von einer am Holm (1) befestigten Stütze (5, 50), die an ihrer Oberseite eine einen Teilbereich des Holmumfangs umschließende Nut (12, 52) aufweist, untergriffen ist und daß jede Stütze (5, 50) ihrerseits am Fahrzeugdach befestigbar ist.

2. Dachreling nach Anspruch 1, dadurch gekennzeichnet, daß jede Stütze (5, 50) eine untere, sich auf dem Fahrzeugdach abstützende Stützfläche (11, 51) und eine obere, der jeweiligen Abbiegung (2) des Holms (1) folgende konkav ausgebildete Auflagefläche (12, 52) für den Holm (1) aufweist und zum einen am Fahrzeugdach und zum anderen am Holm (1) anschraubbar ist.

3. Dachreling nach Anspruch 1 oder 2, dadurch gekennzeichnet, daß jede Stütze (5) von unten her mit dem Holm (1) und von unten her mit dem Fahrzeugdach verschraubbar ist.

4. Dachreling nach Anspruch 1 oder 2, dadurch gekennzeichnet, daß jede Stütze (50) von unten her mit dem Holm (1) und von oben her mit dem Fahrzeugdach verschraubbar ist.

5. Dachreling nach wenigstens einem der Ansprüche 1, 2 oder 4, dadurch gekennzeichnet, daß jede Stütze (50) eine optisch einen Stützfuß bildende, sich an der jeweiligen Abbiegung (2) des Holms (1) abstützende Abdeckkappe (57) trägt, die einen U-förmigen Querschnitt mit Schenkeln (58) aufweist, die parallel zum Holm (1) verlaufen und mit ihren freien Enden zum jeweiligen Holmende ausgerichtet sind.

6. Dachreling nach Anspruch 5, dadurch gekennzeichnet, daß jede Stütze (50) eine Abdeckkappe (57) trägt, die sich über den axialen Bereich einer Abbiegung (2) des Holms (1) erstreckt.

7. Dachreling nach Anspruch 5 oder 6, dadurch gekennzeichnet, daß jede Abdeckkappe (57) als Kunststoff-Spritzgußteil ausgebildet ist und angeformte Rastelemente (59) zur Halterung an jeweils einer Stütze (50) aufweist.

## Claims

1. A roof handrail for vehicles, with a tubular banister (1) positioned in parallel at a distance from the roof surface (4) extending along a lateral roof frame and with two supporting elements (5, 50) positioned at the banister's ends for the fixing of the roof handrail on the vehicle roof, wherein the banister is formed at the ends with a respective bending (2), characterised in that the banister (1) is supported near each bending (2) by a supporting element (5, 50) which is fixed on the banister (1), and which is provided on its upper side with a groove (12, 52), which surrounds a part of the banister's circumference, and in that each supporting element (5, 50) is in turn fixable on the vehicle's roof.

2. A roof handrail according to claim 1, characterised in that each supporting element (5, 50) is provided with a lower supporting surface (11, 51) supported by the. vehicle roof and an upper concave supporting surface (12, 52) adapted to the respective bending (2) of the banister (1) for the banister (1) and which is screwable on one side with the vehicle roof and on the other side with the banister (1).

3. A roof handrail according to claim 1 or 2, characterised in that each supporting element (5) is screwable from the lower side with the banister (1) and from the lower side with the vehicle roof.

4. A roof handrail according to claim 1 or 2, characterised in that each supporting element (50) is screwable from the lower side with the banister (1) and from the upper side with the vehicle roof.

5. A roof handrail according to at least one of the claims 1 2, or 4, characterised in that each supporting element (50) carries a cover cap (57), which optically forms a supporting foot and which is in contact with the respective bending (2) of the banister (1), wherein the cap is provided with a U-formed section, with limbs (58), which are parallel to the banister (1) and which are directed with their free ends towards the respective end of the banister.

6. A roof handrail according to claim 5, characterised in that each supporting element (50) carries a cover cap (57) which extends over the axial portion of a bending (2) on the banister (1).

7. A roof handrail according to claim 5 or 6, characterised in that each cover cap (57) is formed as an injection moulded plastic part and is provided with integrally formed detents (59) for fixing it on a respective supporting element (50).

## Revendications

1. Galerie de toit pour véhicules, comportant une main courante tubulaire (1), laquelle s'étend espacée de, et sensiblement parallèle à, la surface du toit (4) le long d'un cadre latéral de toit, et deux supports (5, 50) aux extrémités de la main courante pour fixer la galerie de toit sur le toit du véhicule, la main courante étant de forme prévoyant respectivement aux extrémités une courbure (2), caractérisée en ce que la main courante (1) dans la zone de chaque courbure (2) est engagée à sa partie inférieure par un support (5, 50) fixé à la main courante (1) et présentant sur son côté supérieur une rainure (12, 52) renfermant une zone partielle du perimètre de la main courante, et que chaque support (5, 50) peut à son tour être fixé au toit du véhicule.

2. Galerie de toit pour véhicules selon la revendication 1, caractérisée en ce que chaque support (5, 50) présente une surface inférieure d'appui (11, 51) qui est soutenue sur le toit du véhicule et une surface supérieure d'appui (12, 52) pour la main courante (1), laquelle est de forme concave et épouse la respective courbure (2) de la main courante (1), et que chaque support peut être vissé d'une part au toit du véhicule et d'autre part à la main courante (1).

3. Galerie de toit pour véhicules selon la revendication 1 ou 2, caractérisée en ce que chaque support (5) peut être relié par vissage d'en bas à la main courante et d'en bas au toit du véhicule.

4. Galerie de toit pour véhicules selon la revendication 1 ou 2, caractérisée en ce que chaque support (50) peut être relié par vissage, d'en bas à la main courante (1) et d'en haut au toit du véhicule.

5. Galerie de toit pour véhicules selon au moins l'une des revendications 1, 2 ou 4, caractérisée en ce que chaque support (50) porte un capuchon de couverture (57) formant, du point de vue visuel, un pied d'appui, est soutenu sur la respective courbure (2) de la main courante (1) et présente une section transversale en forme de "U" dont les ailes (58) s'étendent parallèlement à la main courante (1) et sont alignées, avec leurs extrémités libres, à la respective extrémité de la main courante.

6. Galerie de toit pour véhicules selon la revendication 5, caractérisée en ce que chaque support (50) porte un capuchon de couverture (57) s'étendant le long de la zone axiale d'une courbure (2) de la main courante (1).

7. Galerie de toit pour véhicules selon la revendication 5 ou 6, caractérisée en ce que chaque capuchon de couverture (57) est en forme de pièce en matière synthétique moulée par injection et présente des éléments d'encliquetage (59) modelés sur celui-ci pour la retenue respectivement sur un support (50).
